# EUROPEAN PATENT APPLICATION

(11) **EP 4 357 679 A1**
(43) Date of publication of application: **24.04.2024**
(21) Application number: 22202018.2
(22) Date of filing: 17.10.2022
(51) Int. Cl.: F24C 15/32, F16K 31/26, F16K 33/00

(54) **STEAM DEVICE FOR FOOD OVEN**

(71) Applicant: ELECTROLUX APPLIANCES AKTIEBOLAG, 105 45 Stockholm (SE)
(72) Inventor: CARNEVALI, Marco, 47122 Forli (IT); ROBBE, Claudia, 33170 Pordenone (IT)
(74) Representative: Electrolux Group Patents

(57) **Abstract**

The invention relates to a steam device (1) for a cooking oven (2), comprising at least the following components:
- an evaporator (3);
- an evaporation fluid source (4) for supplying an evaporation fluid to the evaporator (3);
- a control valve (5) having a control volume (7) defined by a valve housing (6) and arranged in fluidic communication between the evaporator (3) and the evaporation fluid source (4) such that an evaporation fluid level (8) in the evaporator (3) depends on a control fluid level (9) in the control volume (7); and
-a steam connection (10) from the evaporator (3) to the cooking oven (2);

said control valve (5) having a fluid inlet (11) and a fluid outlet (12) to said control volume (7) and a floater (13) disposed in said control volume (7),
said floater (13) having a buoyancy volume (15) defined by a wall (14) with a buoyancy fluid enclosed therein and being installed in said control volume (7) to rise by buoyancy upon a rise of the control fluid level in said control volume (7), thereby closing said fluid inlet (11) of said control volume (7). The steam device (1) is particularly characterized in that the floater (13) comprises a thermal pressure compensator (16) adapted to compensate for pressure forces on the wall (14) of the floater (13)

## Description

The invention relates to a steam device for a cooking oven, and to a cooking oven having such a steam device with a steam function.

From the prior art, cooking ovens with steam devices are known to cook food with hot steam. For a reliable and safe operation of such a steam device, the control of the evaporation fluid supply is of crucial importance. One reliable option is to use a self-regulating steam device comprising an evaporator; an evaporation fluid source for supplying an evaporation fluid to the evaporator; a control valve having a control volume defined by a wall and disposed in fluidic communication between the evaporator and the evaporation fluid source such that an evaporation fluid level in the evaporator depends on a control fluid level of the evaporation fluid in the control volume; and a steam connection from the evaporator to the cooking oven. The control valve comprises a control volume defined by a valve housing and having a fluid inlet and a fluid outlet, and a floater disposed in the control volume. The floater has a buoyancy volume defined by a wall with a buoyant fluid enclosed therein and is supported in the control volume to rise by buoyancy when an evaporation fluid level in the control volume, thus the control fluid level, rises, thereby closing the fluid inlet of the control volume.

The floater's buoyancy volume is completely sealed off from the control volume by the wall. The buoyancy fluid in the buoyancy volume is usually air. The control fluid, usually water, is present in the control volume up to a control fluid level, while air is usually present above this level.

In an effort to create the best possible buoyancy, the floaters were designed to be as empty as possible with the largest possible volume of air. The inventors have now surprisingly discovered that such a design has unexpected disadvantages. Temperature fluctuations, especially due to the hot components located nearby, for example the evaporator or the cooking chamber of the food oven, cause an expansion or compression of the fluid sealed in the buoyancy volume of the floater. The pressure differences thus caused between the buoyancy volume and the surrounding control volume lead, in the worst case, to component failure when the wall of the floater ruptures. Furthermore, the weld seams on the floater and their immediate surroundings are particularly susceptible to component failure, since mechanical stresses are already present and the wall thickness might be reduced at these points. For example, a lid of the floater is welded fluid-tight to the remaining wall of the floater.

Another disadvantage, surprisingly due to the stability of the floater, is that the floater, or rather its wall and other components, such as the bearing in the control volume or a closing element for closing the fluid inlet, may distort due to the temperature fluctuations, thus affecting the sealing effect and/or the control accuracy, for example, because the floater rises differently than originally as the evaporation fluid increases, the closing element no longer seals the fluid inlet properly, or component failure also occurs, for example, due to non-uniform expansion, especially in the area of the weld seams.

On this basis, the present invention is based on the task of at least partially overcoming the disadvantages known from the prior art. The features according to the invention result from the independent claims, for which advantageous embodiments are shown in the dependent claims. The features of the claims can be combined in any technically sensible manner, whereby the explanations from the following description as well as features from the figures, which comprise supplementary embodiments of the invention, can also be consulted for this purpose.

The invention relates to a steam device for a cooking oven, comprising at least the following components:
- an evaporator;
- an evaporation fluid source for supplying an evaporation fluid to the evaporator;
- a control valve having a control volume defined by a valve housing and disposed in fluid communication between the evaporator and the evaporation fluid source such that an evaporator fluid level in the evaporator is dependent upon a control fluid level in the control volume; and
- a steam connection from the evaporator to the cooking oven; wherein said control valve having a fluid inlet and a fluid outlet to said control volume and a floater disposed in said control volume,
the floater having a buoyancy volume defined by a wall with a buoyant fluid enclosed therein and being installed in the control volume to rise by buoyancy upon a rise of the control fluid level in the control volume, thereby closing the fluid inlet of the control volume.

The steam device is particularly characterized in that the floater comprises a thermal pressure compensator adapted to compensate for pressure forces on the wall of the floater.

In the following description, terms to indicate a vertical direction are used, like top, bottom, increase, decrease, up and down are used. These refer to the earth gravitational field, whereby the earth gravitational force extends from top to bottom. Ordinal numbers used in the preceding and following description serve, unless explicitly indicated to the contrary, only the unambiguous distinguishability and do not reflect any order or ranking of the designated components. An ordinal number greater than one does not imply that another such component must necessarily be present.

An evaporation fluid is provided here by an evaporation fluid source. Preferably, the evaporation fluid is water, especially tap water. The tap water is, for example, but not necessarily treated, for example filtered. Thus, it does not matter whether the water is pure or contains impurities, for example lime. The evaporation fluid source comprises, for example, a domestic or industrial water supply.

From the evaporation fluid source, the evaporation fluid is directed to a control valve, preferably by means of a fluid line. The control valve comprises valve housing, which encloses a control volume. The control volume is filled with the evaporation fluid up to a control fluid level at least during a steam operation, for example while the steam device is in an operating mode to supply steam to the cooking chamber. Above this level, the control volume is preferably filled with air. Via a fluid inlet in the valve housing, the evaporation fluid can be introduced into the control volume from the evaporation fluid source. The evaporation fluid can be discharged from the control volume in the direction of an evaporator via a fluid outlet.

To control the evaporator fluid level in the control volume, a floater is arranged in the control volume. The floater comprises a wall that defines a buoyancy volume. The buoyancy volume is, for example, filled with a buoyancy fluid. The buoyancy fluid has a lower density than the liquid evaporation fluid, preferably the buoyancy fluid is gaseous, particularly preferably air. Thus, as the control fluid level in the surrounding control volume rises, the floater rises due to buoyancy in the evaporation fluid. If the control fluid level rises above a predetermined level, the floater begins to close the fluid inlet. If the control fluid level decreases again, the floater also decreases and reopens the fluid inlet again. Preferably, the floater is installed in the control valve to completely close the fluid inlet, for example, in a substantially fluid-tight manner, when in a closing position. For example, the floater has a closing element by means of which the fluid inlet can be closed, preferably by means of a sealing ring or a rubber gasket respectively. The floater is guided, for example, for translatory movement in the valve housing. Preferably, however, the floater is pivotably mounted so that a pivoting or tilting movement of the floater is produced by the buoyancy.

Preferably, the fluid inlet at the control valve is arranged below the control fluid level during operation of the steam device. Particularly preferably, the fluid inlet is arranged in a lower region of a lateral wall of the control valve. The fluid outlet is preferably also arranged in a lower region of the control valve, in particular at a lowest point or in a bottom section of the wall.

The floater is preferably designed to protrude from the evaporation fluid -while regularly operating the steam device. Thus, the control fluid level is preferably located between the fluid inlet and an upper end of the floater. The control fluid level in an operation of the steam device is thereby predetermined by an operating range of the evaporator fluid level, in which the evaporation fluid should preferably be located during operation in the evaporator.

There is a fluidic connection from the fluid outlet of the control valve, preferably by means of a fluid line, by means of which the evaporation fluid can be conducted to the evaporator. The fluidic connection is designed in such a way that an evaporator fluid level of the liquid evaporation fluid in the evaporator depends on the control fluid level of the evaporation fluid in the control valve. For example, the evaporator and the control valve are connected to each other according to the principle of connected vessels. For example, the evaporator fluid level and the control fluid level are essentially the same.

It is now proposed here to provide a thermal pressure compensator which compensates for pressure forces on the wall of the floater. Such a thermal pressure compensator is, for example, a reinforcement of the wall, which mechanically stabilizes the wall or certain wall sections and/or supports them against each other. Alternatively or additionally, a thermal pressure compensator is provided by means of which the pressure difference between the buoyancy volume and the control volume can be reduced. Such a thermal pressure compensator for reducing the pressure difference is, for example, an element which enables a mass flow from the buoyancy volume, or an element which enables a volume adjustment of the buoyancy volume.

It was surprisingly found that pressure differences between the buoyancy volume and the control volume caused in particular by temperature differences interfere with safe and reliable operation of the control valve with a long service life. The pressure compensation element provides a reliably operable steam device with a long service life.

It is further proposed, in an advantageous embodiment of the steam device, that the thermal pressure compensator is a mechanical wall reinforcement extending along at least a first wall section of the wall of the floater to counteract mechanical deformation of the wall due to a pressure difference between the buoyancy volume and the control volume surrounding the floater.

According to this embodiment, the thermal pressure compensator is designed as a mechanical wall reinforcement. Such a mechanical wall reinforcement extends at least along a first wall section of the wall of the floater and stabilizes it. In this way, a pressure force acting on the wall due to a pressure difference between the buoyancy volume and the control volume surrounding the floater is mechanically compensated.

It is further proposed in an advantageous embodiment of the steam device that the wall reinforcement is an embossment in the first wall section and/or a rib along the first wall section.

According to this embodiment, the wall reinforcement is, for example, an embossment in the wall section and/or a rib along the wall section. In this way, for example, large-area, otherwise flat wall sections can be stabilized. Preferably, such embossings are designed with sharp edges and/or small radii in order to achieve good stiffening. However, the embossment does not necessarily have to formed by an embossing process, but can be formed in a moulding process of the floater, for example.

Alternatively or additionally, ribs are designed along the wall as wall reinforcement. Such a rib is, for example, strip-shaped and nestles against a wall section to stabilize it. Alternatively, such a rib is, for example, an intermediate wall in the buoyancy volume. Preferably, the ribs are made in one piece with the wall to which they adjoin.

It is further proposed in an advantageous embodiment of the steam device that the rib is arranged inside the first wall section and preferably extends in the buoyancy volume of the floater such that it is in contact with a second wall section which extends at an angle, preferably a right angle, to or is opposite the first wall section.

According to this embodiment, the rib is now arranged on the inside of the first wall section, for example within the buoyancy volume. The rib preferably extends in the buoyancy volume of the floater in such a way that it adjoins a second wall section, for example is in contact with it, is preferably attached to it, and is particularly preferably formed integrally with it. By the second wall section is meant here a wall section which extends at an angle, preferably a right angle, to the first wall section or is opposite thereto.

For example, such a rib extends upwardly from a bottom section of the wall along a side wall section or extends from a side wall section over the bottom section. Preferably, such a rib is strip-shaped. In an embodiment in which the rib adjoins two opposing wall sections and thus supports them against each other, the rib extends, for example, from a lateral wall section to an opposing wall section. Preferably, the rib is in contact with a third and/or fourth wall section connecting the opposing wall sections. Preferably, it is attached thereto, and particularly preferably, it is made integral therewith. In such an embodiment, such a rib is, for example, an intermediate wall. Preferably, such an intermediate wall has recesses which connect the areas of the buoyancy volume created by the intermediate wall to each other.

It is further proposed in an advantageous embodiment of the steam device that a plurality of ribs is arranged, preferably at least one rib is arranged at an angle, more preferably orthogonal to another rib.

According to this embodiment, a plurality of ribs is now proposed to reinforce the wall sections of the wall. Preferably, all of the ribs are disposed within the buoyancy volume. For example, a series of strip-shaped ribs is provided along one or more wall sections, for example circumferentially along the lateral wall. Preferably, the ribs are aligned parallel and/or orthogonal to each other along a wall section. Particularly preferably, all the ribs are aligned parallel and/or orthogonal to each other.

In an exemplary embodiment, a plurality of intermediate walls arranged parallel to each other and/or orthogonal to each other are provided in the buoyancy volume.

It is further proposed in an advantageous embodiment of the steam device that the pressure compensation element is formed by an elastic wall section, preferably a membrane, which allows a volume change of the buoyancy volume upon a change of the pressure difference between the buoyancy volume and the control volume by means of an elastic shape change.

According to this embodiment, the pressure compensation element is formed by an elastic wall section. Such an elastic wall section is provided, for example, in addition to a mechanical pressure compensation element, another thermal pressure compensator, or exclusively. Preferably, such an elastic wall section is a membrane. Such an elastic wall section deforms in response to a changing pressure difference between the buoyancy volume and the control volume. A particularly critical case of a pressure difference occurs when the buoyancy fluid in the floater heats up and a pressure force acts from the inside to the outside. In such a case, the elastic wall section expands, thus increasing the volume of the floater. In this way, the pressure difference is reduced and thus compensated. If the buoyancy fluid in the floater cools down again, the wall section deforms back elastically.

Preferably, the elastic wall section is arranged such that the elastic deformation does not change the floater's freedom of movement necessary to close the inlet. Further, the elastic wall section is preferably arranged above the control fluid level during operation of the steam device so that the volume change occurs above the control fluid level and the height of the floater, or the fluid level height at which the floater closes the fluid inlet, does not change when the floater expands.

It is further proposed in an advantageous embodiment of the steam device that the floater is fabricated by injection molding, preferably fabricating an elastic wall section by co-injection into the same mold as the adjacent wall sections.

According to this embodiment, the floater is manufactured by injection molding. Preferably, the floater is made of polyamide.

In a preferred embodiment, an elastic wall section as described above is now manufactured by means of co-injection into the same mold as the surrounding wall sections. In this way, a stable connection between the elastic wall section and the other wall sections can be produced at low cost.

For example, the elastic wall section is made of an elastomer.

It is further proposed in an advantageous embodiment of the steam device that a wall section of the floater is designed as a separately manufactured lid which is fluid-tightly connected to the rest of the floater, the lid having reinforcing ribs arranged on the inside and/or stabilizing shoulders abutting the adjacent wall sections of the wall of the floater.

According to this embodiment, a wall section of the floater is now designed as a separately manufactured lid. The lid is connected to the rest of the floater in a fluid-tight manner. Preferably, the lid is circumferentially bonded or welded to an upper edge of the lateral wall sections. The lid has, for example, reinforcing ribs arranged on the inside and/or stabilizing shoulders abutting the adjacent wall sections of the floater wall.

A weld seam between the lid and the rest of the wall of the floater, for example, leads to mechanical stresses in the component, which can lead to material failure. To avoid this, the lid is separately reinforced and stiffened, for example by means of reinforcing ribs. Due to the flat shape of the lid, the reinforcing ribs are inexpensive and easy to manufacture, for example if they are made in one piece with the lid.

It is further proposed in an advantageous embodiment of the steam device that the thermal pressure compensator is a pressure compensating valve, preferably a two-way valve, a pressure relief valve and/or a water sealing valve.

According to this embodiment, it is now proposed that the thermal pressure compensator is a pressure compensation valve. Such a pressure compensation valve makes it possible, in the event of a pressure difference between the buoyancy volume and the control volume, to let through a mass flow of buoyancy fluid from the floater to relieve excess pressure in the buoyancy volume.

Such a pressure compensation valve is provided, for example, in addition to a mechanical thermal pressure compensator or an elastic wall section, as described above. Alternatively, only a pressure compensation valve is provided as a thermal pressure compensator.

Preferably, such a pressure compensation valve is provided in an upper area of the floater, which is above the control fluid level during operation. This reduces the risk of the evaporation fluid entering the floater. Furthermore, if the buoyancy fluid escapes below the evaporator fluid level, this will cause the evaporation fluid to swirl. This leads, for example, to less accurate control, as the floater begins to fluctuate accordingly. Particularly preferably, the pressure compensation valve is provided in an upwardly directed section of the wall, for example a lid.

In a preferred embodiment, the pressure compensation valve is a two-way valve that allows a flow of buoyancy fluid into the floater when the buoyancy fluid in the floater cools (again), creating a negative pressure in the floater.

In one embodiment, the pressure compensation valve is a pressure relief valve, such as a ball valve. Preferably, the pressure compensation valve is a water-sealing valve to prevent evaporation fluid from entering the floater. However, the valve is designed to be non-gas-sealing, for example, so that a gaseous buoyancy fluid can seep back into the floater even when the valve is closed.

According to another aspect, a cooking oven with steam function is proposed, comprising at least the following components:
- a steam device according to an embodiment as described above; and
- a cooking chamber in fluid communication with the steam device.

A cooking oven with steam function is now further proposed herein, which comprises a steam device according to the above description. The steam device is in fluidic communication with a cooking chamber of the cooking oven. The fluidic connection is, for example, a fluid conduit. From the evaporator of the steam device, the evaporated evaporation fluid can be conducted into the cooking chamber to cook food there.

For example, the evaporator includes an electrically powered heating element to evaporate the liquid evaporation fluid flowing from the control valve into the evaporator. Preferably, during operation, the evaporation fluid is at an evaporator fluid level within a level operating range in the evaporator. The level operating range is preferably such that the heating element is completely covered, or a desired amount of steam is delivered to the cooking chamber, but the evaporator fluid level, defined by the liquid evaporation fluid, does not rise above a certain level, for example to prevent the liquid evaporation fluid from flowing in the cooking chamber.

The invention described above is explained in detail below against the relevant technical background with reference to the accompanying drawings, which show preferred embodiments. The invention is in no way limited by the purely schematic drawings, it being noted that the drawings are not dimensionally accurate and are not suitable for defining dimensional relationships. It is illustrated in
Fig. 1: A food oven with a steam device in a rear view;
Fig. 2: The control valve with the floater according to Fig. 3 in a perspective view;
Fig. 3: the floater according to Fig. 2 in a perspective breakout view;
Fig. 4: A lid of the floater according to Fig. 3 in a perspective view;
Fig. 5: A section of a floater in a cross-sectional view with a membrane; and
Fig. 6: A floater with a pressure compensation valve in a perspective view.

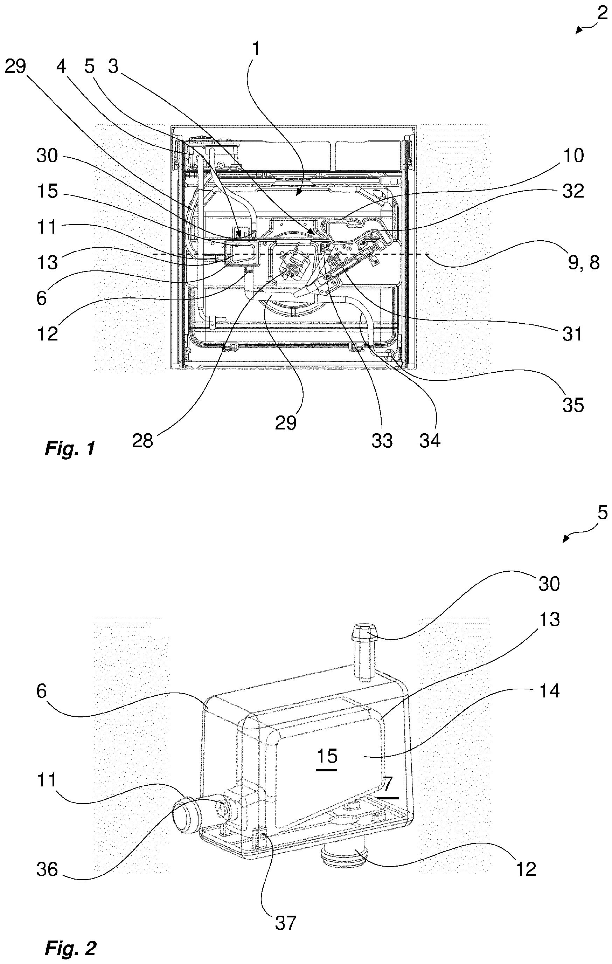

Fig. 1 shows a rear view of a cooking oven **2** with a steam device **1.** In addition to the steam device **1,** the cooking oven **2** comprises a cooking chamber (not visible here) which can be opened towards a front side and which can be supplied with steam from the steam device **1** for heating or cooking food. In addition, a blow motor **28** is arranged centrally on the rear side of the food oven **2** shown here. The air circulation motor **28** is designed to circulate air and generate a uniform temperature distribution within the cooking chamber.

In this embodiment, the steam device **1** comprises an evaporator **3,** a control valve **5** for controlling a flow of evaporation fluid to the evaporator **3,** and a steam connection **10,** here in form of a precipitator, to the cooking chamber. The control valve **5** is connected to an evaporation fluid source **4** via a fluid line **29.** As shown, the evaporation fluid source **4** comprises an optional water tank. Additionally or alternatively, the evaporation fluid source comprises a domestic water connection. The water tank is preferably arranged above the control valve **5,** so that the evaporation fluid can be gravity-driven from the water tank into the control valve **5.** According to this embodiment example, the evaporation fluid is accordingly water. For example, the evaporation fluid source **4** further comprises a filter or a treatment unit for the water. The evaporation fluid is liquid up to the evaporator **3** and is evaporated there. Preferably, only gaseous evaporation fluid enters the cooking chamber.

The control valve **5** has valve housing **6** defining a control volume **7.** In the valve housing **6,** an evaporation fluid source-sided fluid inlet **11,** an evaporator-sided fluid outlet **12** and, as shown, an vent port **30** are provided. The evaporation fluid enters the control volume **7** via the fluid inlet **11,** and a control fluid level **9** for the liquid evaporation fluid is established in the control volume **7.** Preferably, the fluid inlet **11** is arranged below the control fluid level **9** during operation of the steam device **1.** As shown, the fluid outlet **12** is arranged on a lower side of the valve housing **6** and is connected to the evaporator **3** by means of a fluid line **29.** As shown, the optional vent port 30 is arranged on an upper side of the control valve **5.** The vent port **30** is used to discharge air when the control fluid level **9** in the control valve **5** rises. The air has a high absolute humidity, for example at high temperatures in the steam device **1,** which may not want to be discharged to the environment, for example a kitchen. Therefore, the vent port **30** is connected to the water tank, for example, as shown.

The evaporator **3,** which is connected to the control valve **5** by means of a fluid line **29,** comprises a vapor generator **31,** an optional separator **32** and a condensate line **33.** The vapor generator **31** is a tubular evaporator which extends diagonally. At a lower end, the vapor generator **31** has a liquid inlet and at an upper end, a gas outlet. The evaporator **3** is configured such that the evaporation fluid rises in liquid state from below through the liquid inlet into the evaporator **3,** is evaporated in the steam generator **31,** and is passed in gaseous state through the gas outlet to the separator **32** and then through the steam connection **10** into the cooking chamber. As shown, the evaporator **3** is connected to the control valve **5** by means of the fluid line **29** according to the principle of connected vessels, so that the evaporator fluid level **8** of liquid evaporation fluid in the evaporator **3** is at the same level as the control fluid level **9.** In the optional separator **32,** condensate droplets of the evaporation fluid are separated and returned to a point upstream of the evaporator **3** via the condensate line **33.**

The evaporator fluid level **8** is controlled by means of the control valve **5** during operation within an operating range. Since the evaporator fluid level **8** is directly dependent on the control fluid level **9,** this is done by controlling the control fluid level **9.** The operating range thereby defines an upper limit and a lower limit for the evaporator fluid level **8.** For example, the upper limit is set so that the liquid evaporation fluid does not exit the gas outlet of the tubular evaporator and flow into the cooking chamber. For example, the lower limit is such that a sufficient volume flow of gaseous fluid enters the cooking chamber or a heating element of the evaporator **3** is completely covered. Preferably, the evaporator fluid level **8** is controlled to remain substantially constant during operation.

An optional drain line **34** with a drain valve **35** is also branched off from the fluid line **29.** Via the drain line **34,** excess evaporation fluid can be discharged from the steam device **1** by opening the drain valve **35,** for example.

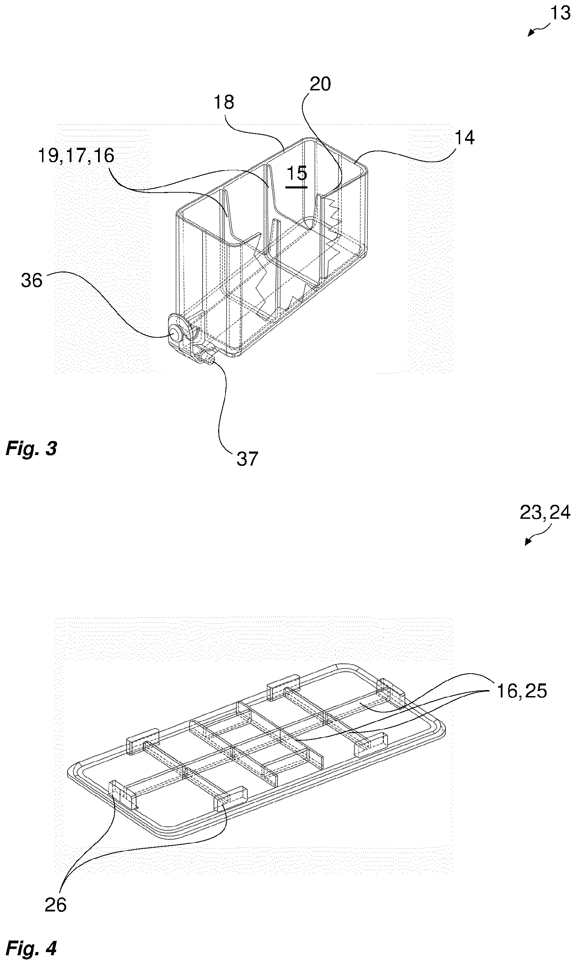

In Fig. 2, the control valve 5 of Fig. 3 is shown in detail in a perspective view. The control valve **5** controls the control fluid level **9** (see Fig. 1) and thus the evaporator fluid level **8** by means of a floater **13.** The floater **13** comprises a wall **14** which defines a buoyancy volume **15.** In other words, the floater **13** is hollow. Preferably, the buoyancy volume **15** includes air as the buoyancy fluid. Due to the lower density of air compared to liquid water, the floater **13** floats and rises with the evaporator fluid level **8**.t

By means of the floater **13,** the fluid inlet **11** of the valve housing **6** can be closed. For this purpose, the floater **13** has, for example, a closing element **36** which closes the opening of the fluid inlet **11.** Preferably, by means of the floater **13,** the inlet can be completely closed in a closed position. The closing element **36** is designed, for example, to change an opening width of the fluid inlet **11** as a function of the position of the floater **13,** for example the opening width is reduced when the floater **13** is rising and the opening width is increased when the floater **13** is falling.

As shown, the floater **13** is a cuboid, with the underside, for example the bottom, being beveled in relation to the other wall sections. A floater bearing **37** is provided at the lower left corner as shown, which pivotably supports the floater **13** in the valve housing **6.** If the control fluid level **9** rises, the floater **13** rises with it in a pivoting movement around the bearing **37** and tilts to the left as shown, so that the closing element **36** closes the fluid inlet **11.** If the control fluid level **9** drops again because the evaporation fluid drains through the fluid outlet **12,** the floater **13** drops and opens the fluid inlet **11** again.

The floater **13** includes an internal thermal pressure compensator **16,** which is shown in Fig. 3 and Fig. 4 and explained in this regard.

In Fig. 3, the floater **13** according to Fig. 2 is shown in a perspective breakout view. In this embodiment, the floater **13** is shown without the lid **24** shown in Fig. 4. For better illustration, the floater **13** is shown with a breakout. Thus, the thermal pressure compensator **16** arranged within the buoyancy volume **15,** for example within the wall **14,** can be seen. In this embodiment, the thermal pressure compensator **16** are mechanical thermal pressure compensator **16** in the form of ribs **19,** more specifically in the form of intermediate walls. The intermediate walls extend from a first wall section **18** to a second wall section **20** of the wall **14** and at a lower end adjoin a further wall section, in this case the bottom section. The ribs **19** are secured to the wall **14** by a material bond. For example, the ribs **19** are bonded, welded, or integrally formed with the wall **14.** Preferably, the floater **13** and the ribs **19** are produced by injection molding, particularly preferably from polyamide.

In Fig. 4, the lid **24** of the floater **13** according to Fig. 3 is shown in a perspective view. The lid **24** is designed here with a plurality of thermal pressure compensators **16** for stiffening the floater **13.** These are correspondingly arranged in the floater **13** at a lid-side wall section, preferably formed integrally therewith. In this embodiment example, the thermal pressure compensators **16** are designed as reinforcing ribs **25** and stabilizing shoulders **26,** respectively. The reinforcing ribs **25** are, for example, in contact on the inside with the adjacent lateral wall **14** of the floater **13** in an assembled state of the cover. In this way, the lateral wall sections can be additionally stabilized and the position of the cover **24** is aligned by the stabilizing shoulders **26** during assembly.

For assembly, the lid **24** is placed on the remaining floater **13** from above and welded fluid-tight to the adjacent lateral wall sections. This creates the floater **13** as shown in Fig. 2 or Fig. 1.

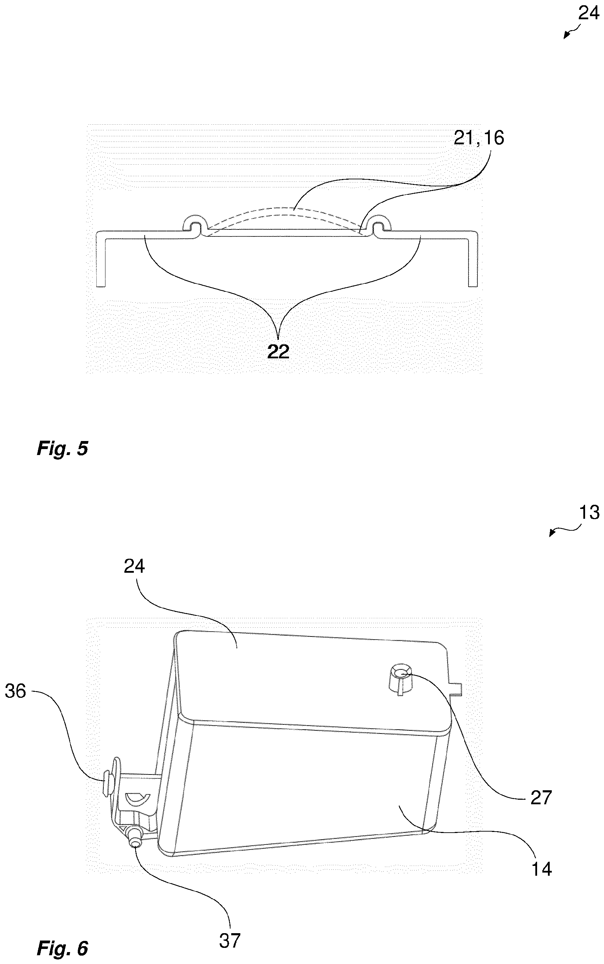

In Fig. 5, upper wall section, for example a lid **24,** of a floater **13** is shown in a sectional view with a membrane. In this embodiment, the floater **13** comprises an elastic wall section **21.** The elastic wall section **21** is designed as a membrane, for example. The elastic wall section **21** deforms in response to a changing pressure difference between the buoyancy volume **15** and the control volume **7.** The deformation of the elastic wall section **21** is shown in this embodiment example by means of the dashed line.

In this case, the elastic wall section **21** is bulged outward by an overpressure in the buoyancy volume **15.** The overpressure occurs, for example, because the buoyancy fluid heats up. The control volume **7** surrounding the floater **13,** on the other hand, has a pressure equalization, for example, so that the pressure rises in the floater **13** and not in the control volume **7.** Preferably, the membrane is manufactured by means of co-injection in an injection molding process with the adjacent wall section **22.**

In Fig. 6, a floater **13** with a pressure compensation valve **27** is shown in a perspective view. In this embodiment, the cover **24** of the floater **13** includes a pressure compensation valve **27.** In the embodiment shown, the pressure compensation valve **27** is a ball valve. The pressure compensation valve **27** allows the buoyancy fluid to flow out of the floater **13,** for example, into the control volume **7,** in the event of an overpressure in the floater **13.** In the preferred embodiment shown, the pressure compensation valve **27** is arranged above the control fluid level **9** during operation, for example as shown on an upper side of the floater **13.** The pressure compensation valve **27** is preferably sealing against the evaporation fluid, for example water, but purely optionally not sealing against the buoyancy fluid, preferably a gas, particularly preferably air. In this way, for example, air diffuses back into the floater **13** when the pressure in the buoyancy volume **15** drops again. Alternatively, the pressure compensation valve **27** is provided, for example, as a two-way valve, so that the buoyancy fluid can flow from the control volume **7** into the buoyancy volume **15** in the event of a negative pressure in the buoyancy volume **15.**

Further, the floaters **13** shown in Fig. 6 and Fig. 5 correspond to the floater **13** shown in Fig. 3 and Fig. 4, although these may or may not have the internal mechanical pressure compensation element **16.** Accordingly, the associated description applies and the floater **13** can be used without further modifications in a cooking oven **2** according to Fig. 1 or a control valve **5** according to Fig. 2.

**List of reference numerals**

| | | | |
|---|---|---|---|
| 1 | steam device | 31 | steam generator |
| 2 | cooking oven | 32 | Separator |
| 3 | evaporator | 33 | condensate line |
| 4 | evaporation fluid source | 34 | drain line |
| 5 | control valve | 35 | drain valve |
| 6 | valve housing | 36 | closing element |
| 7 | control volume | 37 | floater bearing |
| 8 | evaporator fluid level | | |
| 9 | control fluid level | | |
| 10 | steam connection | | |
| 11 | fluid inlet | | |
| 12 | fluid outlet | | |
| 13 | floater | | |
| 14 | wall | | |
| 15 | buoyancy volume | | |
| 16 | pressure compensation element | | |
| 17 | wall reinforcement | | |
| 18 | first wall section | | |
| 19 | rib | | |
| 20 | second wall section | | |
| 21 | elastic wall section | | |
| 22 | adjacent wall section | | |
| 23 | lid wall section | | |
| 24 | lid | | |
| 25 | reinforcing ribs | | |
| 26 | stabilization shoulders | | |
| 27 | pressure compensation valve | | |
| 28 | recirculation motor | | |
| 29 | fluid line | | |
| 30 | vent connection | | |

## Claims

1. Steam device (1) for a cooking oven (2), comprising at least the following components:
- an evaporator (3);
- an evaporation fluid source (4) for supplying an evaporation fluid to the evaporator (3); and
- a control valve (5) having a control volume (7) defined by a valve housing (6) and arranged in fluidic communication between the evaporator (3) and the evaporation fluid source (4) such that an evaporator fluid level (8) in the evaporator (3) depends on a control fluid level (9) in the control volume (7); and
- a steam connection (10) from the evaporator (3) to the cooking oven (2);
wherein said control valve (5) having a fluid inlet (11) and a fluid outlet (12) to said control volume (7) and a floater (13) disposed in said control volume (7),
said floater (13) having a buoyancy volume (15) defined by a wall (14) with a buoyancy fluid enclosed therein and being installed in said control volume (7) to rise by buoyancy upon a rise in an control fluid level in said control volume (7), thereby closing said fluid inlet (11) of said control volume (7),
**characterized in that**
the floater (13) comprises a thermal pressure compensator (16) adapted to compensate for pressure forces on the wall (14) of the floater (13)

2. Steam device (1) according to claim 1, wherein said thermal pressure compensator (16) is a mechanical wall reinforcement (17) extending at least along a first wall section (18) of said wall (14) of said floater (13) to counteract a mechanical deformation of said wall (14) due to a pressure difference between said buoyancy volume (15) and said control volume (7) surrounding said floater (13).

3. Steam device (1) according to claim 2, wherein said wall reinforcement (17) is an embossment in said first wall section (18) and/or a rib (19) along said first wall section (18).

4. Steam device (1) according to claim 3, wherein the rib (19) is arranged inside the first wall section (18) and preferably extends in the buoyancy volume (15) of the floater (13) in such a way that it is in contact with a second wall section (20) which extends at an angle, preferably a right angle, to or is opposite the first wall section (18).

5. Steam device (1) according to any one of the preceding claims, wherein
a plurality of ribs (19) is arranged, preferably at least one rib (19) being arranged at an angle, particularly preferably orthogonal to another rib (19).

6. Steam device (1) according to any one of the preceding claims, wherein the thermal pressure compensator (16) is formed by an elastic wall section (21), preferably a membrane, which allows a volume change of the buoyancy volume (15) upon a change of the pressure difference between the buoyancy volume (15) and the control volume (7) by means of an elastic shape change.

7. Steam device (1) according to any one of the preceding claims, wherein the floater (13) is manufactured by injection molding, preferably wherein an elastic wall section (21) is manufactured by co-injection into the same mold as the adjacent wall sections (22).

8. Steam device (1) according to one of the preceding claims, wherein a wall section (23) of the floater (13) is designed as a separately manufactured lid (24) which is connected to the rest of the floater (13) in a fluid-tight manner, wherein the lid (24) has reinforcing ribs (25) arranged on the inside and/or stabilizing shoulders (26) abutting the adjacent wall sections (22) of the wall (14) of the floater (13)

9. Steam device (1) according to any of the preceding claims, wherein the thermal pressure compensator (16) is a pressure compensation valve (27), preferably a two-way valve, a pressure relief valve and/or a water sealing valve.

10. Cooking oven (2) with steam function, comprising at least the following components:
- a steam device (1) according to any one of the preceding claims; and
- a cooking chamber in fluid communication with the steam device (1).
